# EUROPEAN PATENT SPECIFICATION

(11) **EP 3 527 482 B1**
(45) Date of publication and mention of the grant of the patent: **12.05.2021**
(21) Application number: 17862550.5
(22) Date of filing: 17.10.2017
(51) Int. Cl.: B63H 21/14, F02B 61/04, F02D 19/06, F02B 25/04, F02D 19/10, F02D 41/00, F02D 41/30, F02D 13/02

(54) **SHIP ENGINE**
SCHIFFSMOTOR
MOTEUR DE NAVIRE

(30) Priority: 17.10.2016 KR 20160134562; 12.10.2017 KR 20170132838; 12.10.2017 KR 20170132848; 12.10.2017 KR 20170132852
(43) Date of publication of application: 21.08.2019
(73) Proprietor: Hyundai Heavy Industries Co., Ltd., Ulsan 44032 (KR)
(72) Inventor: KIM, Ki Doo, Ulsan 44032 (KR); LEE, Hyo Jeong, Ulsan 44032 (KR)
(74) Representative: Betten & Resch
(86) International application number: PCT/KR2017/011469
(87) International publication number: WO 2018/074817

(56) References cited:
- EP-A1- 0 397 521
- EP-A1- 1 380 738
- EP-A1- 2 634 398
- JP-A- H0 626 342
- JP-A- H0 626 342
- JP-A- H07 269 358
- JP-B2- 3 797 133
- KR-A- 20100 130 662
- US-A- 4 790 270
- US-A- 5 271 358
- US-A1- 2009 013 980
- US-A1- 2014 238 350
- US-A1- 2016 298 554

## Description

### TECHNICAL FIELD

The present invention relates an engine for a ship, which propels the ship.

### BACKGROUND ART

In general, an engine for a ship includes various engines such as a diesel engine, a gas turbine engine, and a dual fuel engine. In particular, the dual fuel engine is widely used owing to an advantage that it can use two fuels, e.g., gas and diesel together.

Such an engine is classified into a low pressure engine and a high pressure engine according to a pressure at which gas is supplied to a cylinder.

In the low pressure engine, a gas supply valve capable of supplying gas at a low pressure, e.g., 5 to 30 bars is installed in the middle of a cylinder, and air and the gas are pre-mixed before ignition by spraying the gas under compression of the air, so that premixed combustion is possible.

In the high pressure engine, a fuel spray valve capable of supplying gas at a high pressure, e.g., 300 bars is installed at an upper side of a cylinder, and diffusion combustion is performed by compressing air and then spraying the gas at the upper side of the cylinder, so that high power is produced.

However, the conventional engine has problems as follows.

First, in the conventional engine, the low pressure engine supplies gas under the compression of air, and therefore, the gas and the air are not uniformly mixed. Accordingly, the conventional engine has a problem in that power is lowered, knocking occurs, and the output of nitrogen oxide (NOx) that is an environmental pollutant is increased. Also, the conventional engine has a problem in that the compression ratio of the engine is decreased to prevent occurrence of knocking due to premixed combustion, and therefore, the efficiency of the engine is deteriorated. In particular, there is a problem in that, in a dual fuel engine, the compression ratio of the engine, which is decreased to prevent occurrence of knocking in a gas mode in which gas is used as fuel, the efficiency of the engine is deteriorated in a diesel mode in which diesel is used as fuel.

Second, in the conventional engine, the high pressure engine should spray gas in a state in which air is compressed in the cylinder, and therefore, the gas should be sprayed at a high pressure. Accordingly, the conventional engine requires a separate high pressure fuel supply device for supplying gas at a high pressure, and therefore, there is a problem in that installation cost and operational expense are increased. Thus, the development of an engine for a ship, which can solve the above-described problems at low cost is urgently needed.

US 5 271 358 A relates to a fuel injection system for an engine and that is particularly adapted for use in a two cycle or ported engine.

Fuel injection system for engines that employs a fuel inject that sprays into a chamber to which compressed air is delivered and which chamber communicates with the combustion chamber through a port that is opened and closed by the reciprocation of the piston in a reciprocating engine.

US 4 790 270 A discloses a two-stroke spark ignition engine, where fuel is injected through the cylinder wall at a location opposite to and above the level of the exhaust port. The fuel is delivered in the form of a number of streams such as , for example, streams.

US 2014/0238350 A1 refers to an apparatus for injecting gaseous fuel into a compression ignition engine.

### DISCLOSURE

### TECHNICAL PROBLEM

The present invention is conceived to solve the aforementioned problems. Accordingly, an object of the present invention is to provide an engine for a ship, which can uniformly mix fuel and air, which are supplied to a cylinder.

### TECHNICAL SOLUTION

To solve the aforementioned problems, the present invention may include the following configurations.

According to an aspect of the present invention, there is provided an engine for a ship, including: a cylinder providing a space for combusting fuel; a piston reciprocating between a top dead point and a bottom dead point in the cylinder; and a supplier coupled to the cylinder, the supplier supplying the fuel and air to the cylinder, wherein the supplier includes: a fuel supply apparatus supplying the fuel to the cylinder; and an air supply apparatus supplying the air to the cylinder, wherein the air supply apparatus includes an auxiliary air supply member supplying the air to the cylinder between a lower side and an upper side of the cylinder, where the auxiliary air supply member supplies the air together with the fuel when the fuel is supplied by the fuel supply apparatus while the piston is being moved from the bottom dead point to the top dead point.

In the engine according to the present invention, the air supply apparatus may include a main air supply member supplying the air to the cylinder at the lower side of the cylinder.

In the engine according to the present invention, the auxiliary air supply member may supply the air to the cylinder after the main air supply member supplies the air to the cylinder.

In the engine according to the present invention, the fuel supply apparatus may be coupled to the auxiliary air supply member, and the auxiliary air supply member may supply the air to the fuel supplied by the fuel supply apparatus such that mixed fuel in which the air and the fuel are mixed is supplied to the cylinder.

In the engine according to the present invention, the auxiliary air supply member may include an air supply means supplying the air to the cylinder, an air supply pipe connecting the air supply means to the cylinder, and an air supply valve installed in the air supply pipe, the air supply valve opening/closing the air supply pipe such that the air is supplied to the cylinder, and the fuel supply apparatus may include a fuel supply means supplying the fuel to the cylinder, a fuel supply pipe connecting the fuel supply means to the air supply pipe, and a fuel supply valve installed in the fuel supply pipe, the fuel supply valve opening/closing the fuel supply pipe such that the fuel is supplied to the air supply pipe.

In the engine according to the present invention, the fuel supply pipe may be coupled to the air supply pipe to be located further upward than the air supply pipe.

The engine according to the present invention may include a controller controlling the air supply valve and the fuel supply valve. The controller may control the air supply valve and the fuel supply valve such that the air supply valve and the fuel supply valve respectively opens/closes the air supply pipe and the fuel supply pipe according to a crank angle of a crank shaft installed to be connected to the piston.

In the engine according to the present invention, the controller may include: an acquisition mode in which a crank angle of the crank shaft is acquired; and a control mode in which open/close timings of each of the air supply valve and the fuel supply valve are controlled according to the crank angle of the crank shaft, which is acquired in the acquisition mode.

The engine according to the present invention may include a controller controlling the air supply valve and the fuel supply valve. The controller may control the air supply valve and the fuel supply valve such that the supply of the air from the air supply pipe to the cylinder is stopped later than that of the fuel supplied from the fuel supply pipe to the air supply pipe.

The engine according to the present invention may include a controller controlling the air supply valve and the fuel supply valve. The controller may control the air supply valve and the fuel supply valve such that the air supplied from the air supply pipe to the cylinder is supplied at least earlier than the fuel supplied from the fuel supply pipe to the air supply pipe.

In the engine according to the present invention, the main air supply member may include an air storage chamber storing the air to supply the air to the cylinder.

The engine according to the present invention may include a bypass supplying a portion of the air stored in the air storage chamber to the auxiliary air supply member.

In the engine according to the present invention, the bypass may include: a bypass storage chamber compressing and storing the air supplied from the air storage chamber; a first bypass pipe connecting the bypass storage chamber to the air storage chamber; a bypass compression apparatus installed in the first bypass pipe, the bypass compression apparatus compressing the air supplied from the air storage chamber to the bypass storage chamber; and a second bypass pipe connecting the bypass storage chamber to the auxiliary air supply member such that the air compressed and stored in the bypass storage chamber is supplied to the auxiliary air supply member.

The engine according to the present invention may include: an exhaust valve coupled to the cylinder to be located at the upper side of the cylinder, the exhaust valve opening/closing the cylinder such that exhaust gas generated when the fuel is combusted in the cylinder is discharged; and a controller controlling the exhaust valve and the supplier. The controller may control the exhaust valve and the supplier such that the mixed fuel is supplied to the cylinder after the cylinder is closed.

The engine according to the present invention includes: an exhaust valve coupled to the cylinder to be located at the upper side of the cylinder, the exhaust valve opening/closing the cylinder such that exhaust gas generated when the fuel is combusted in the cylinder is discharged; and a controller controlling the exhaust valve. The controller controls the exhaust valve such that, in a gas mode in which the fuel is gas, a close timing at which the exhaust valve closes the cylinder is later than that in a diesel mode in which the fuel is diesel.

### ADVANTAGEOUS EFFECTS

According to the present invention, the following advantages can be obtained.

The present invention is implemented to supply mixed fuel in which fuel and air are mixed to a cylinder, so that the air and the fuel in the cylinder can be uniformly mixed. Thus, lower of power can be prevented at low cost. In addition, occurrence of knocking can be prevented, and the output of an environment pollutant such as nitrogen oxide (NOx) can be reduced.

### BRIEF DESCRIPTION OF THE DRAWINGS

FIG. 1 is a schematic block diagram of an engine for a ship according to the present invention.
FIG. 2 is a schematic view of the engine according to the present invention.
FIG. 3 is a schematic block diagram illustrating a supplier in the engine according to the present invention.
FIG. 4 is a schematic block diagram illustrating a fuel supply apparatus and an air supply apparatus in the engine according to the present invention.
FIG. 5 is an enlarged sectional view of portion A shown in FIG. 2, illustrating a fuel supply valve and an air supply valve in the engine according to the present invention.
FIG. 6 is a schematic sectional view of portion B shown in FIG. 5, illustrating a fuel supply pipe and an air supply pipe in the engine according to the present invention.
FIGS. 7 and 8 are schematic operation state views illustrating a case where air is supplied earlier than air in the engine according to the present invention.
FIGS. 9 and 10 are schematic operation state views illustrating a case where the supply of the air is stopped later than that of the fuel in the engine according to the present invention.
FIG. 11 is a schematic block diagram illustrating a controller in the engine according to the present invention.
FIG. 12 is a schematic graph illustrating open/close timings of the air supply valve and the fuel supply valve in the engine according to the present invention.
FIG. 13 is a schematic block diagram illustrating an air storage chamber and a bypass in the engine according to the present invention.
FIGS. 14 and 15 are schematic operation state views illustrating a case where the fuel is supplied after an exhaust valve closes a cylinder in the engine according to the present invention.
FIG. 16 is a schematic graph illustrating open/close timings of an exhaust valve, the air supply valve, and the fuel supply valve in the engine according to the present invention.
FIG. 17 is a schematic graph illustrating open/close timings of the exhaust valve in a gas mode and a diesel mode in the engine according to the present invention.

### MODE FOR THE INVENTION

In this specification, when designating reference numerals to elements of each drawing, the same elements will be designated by the same reference numerals although they are shown in different drawings.

Meanwhile, the meanings of terms described in this specification should be understood as follows.

The singular forms should be understood as including the plural forms as well unless the context clearly indicates otherwise. The terms "first," "second," and the like are used to discriminate any one element from other elements and the scope of the present invention is not intended to be limited by these terms.

The terms "comprises," "includes," and the like should be understood as not precluding the presence or addition of one or more other features, integers, steps, operations, elements, components, or combinations thereof.

The term "at least one" should be understood as including all combinations that may be suggested from one or more associated items. For example, the meanings of "at least one selected from a first item, a second item, and a third item" includes not only each of the first item, the second item, and the third item, but also all combinations of these items that may be suggested from two or more ones of the first item, the second item, and the third item.

Hereinafter, an engine for a ship according to the present invention will be described in detail with reference to the accompanying drawings.

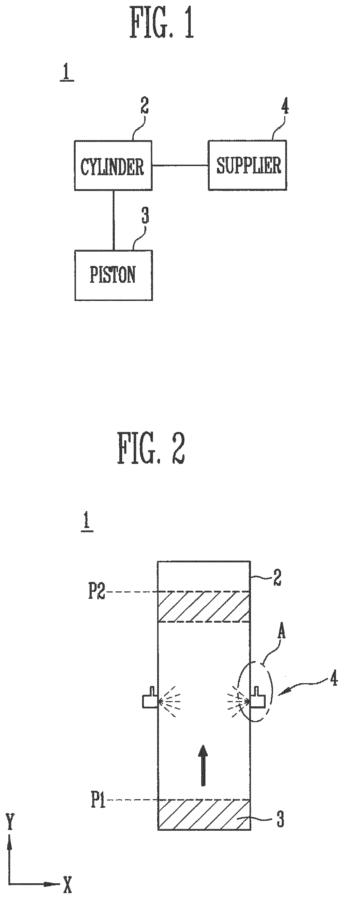

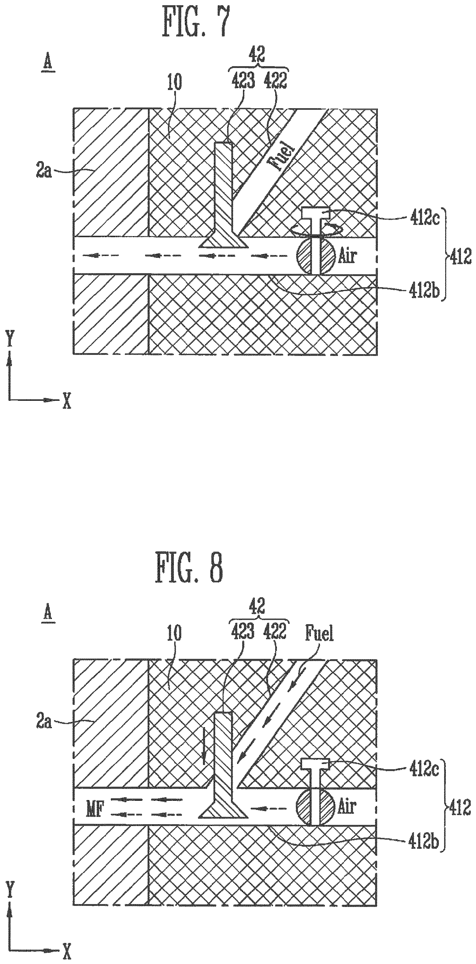

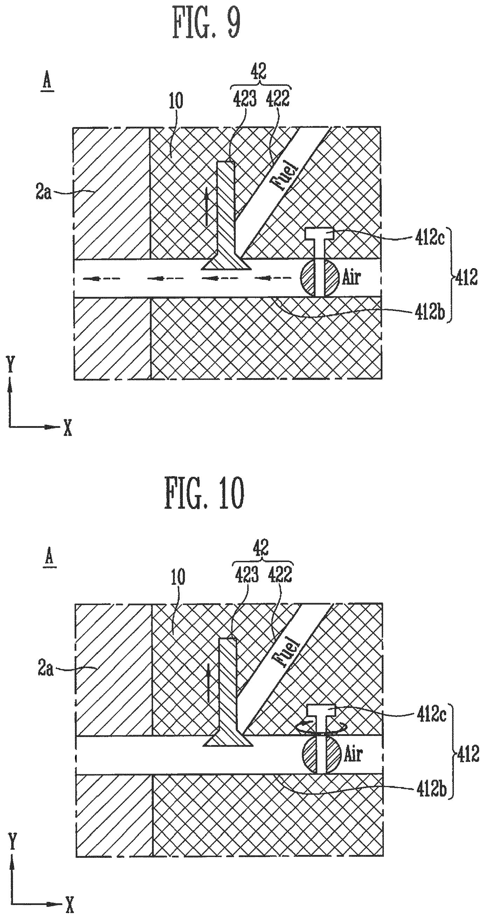

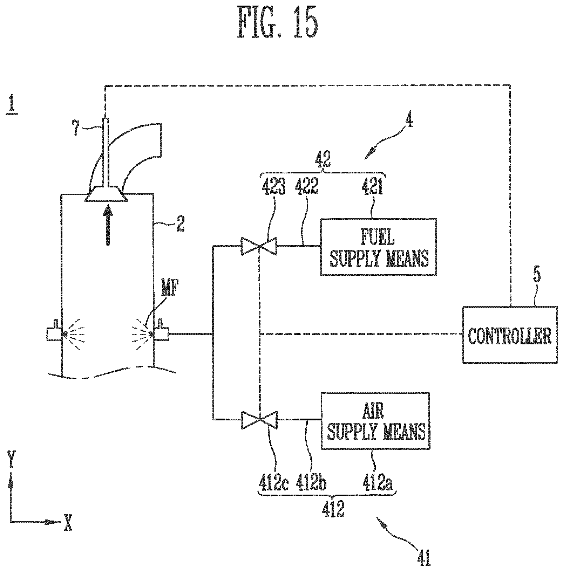

Referring to FIGS. 1 to 17, the engine 1 according to the present invention mixes fuel and air and supplies mixed fuel to a cylinder, to prevent lowering of power for propelling the ship and occurrence of knocking. The knocking is a phenomenon in which a sound as if a hammer knocks occurs due to abnormal combustion.

To this end, the engine 1 according to the present invention generally includes a cylinder 2, a piston 3, and a supplier 4.

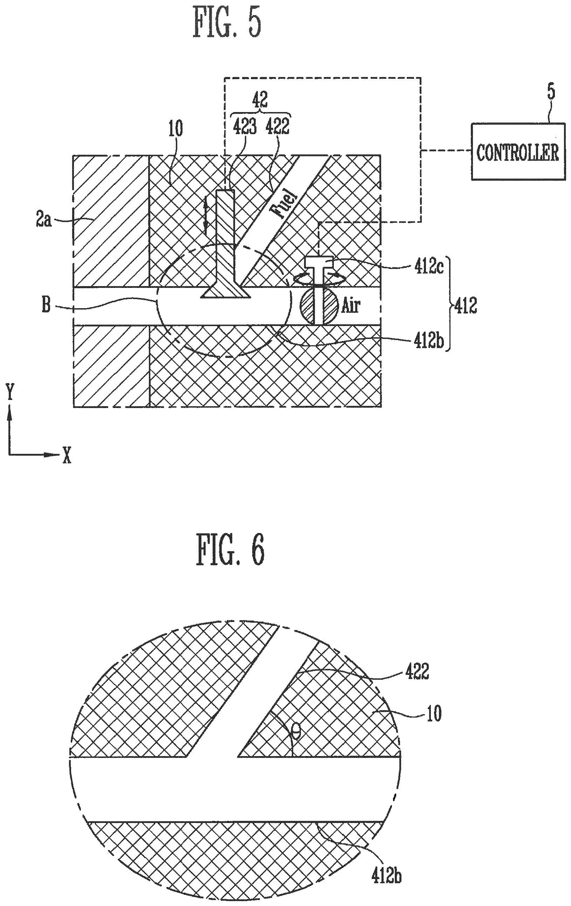

The cylinder 2 provides a space for combusting fuel. The cylinder 2 may be formed in an engine block 10 (shown in FIG. 5). The cylinder 2 may be formed in a cylindrical shape that is empty therein. A cylinder liner 2a (shown in FIG. 5) may be installed between the cylinder 2 and the engine block 10. The piston 3 is movably installed in the cylinder 2. The piston 3 reciprocates vertically with respect to a Y-axis direction (shown in FIG. 2) in the cylinder 2. The supplier 4 for supplying fuel and air may be coupled to the cylinder 2. Accordingly, the cylinder 2 may be supplied with the air and the fuel from the supplier 4. The volume of the cylinder 2 is increased/decreased when the piston 3 reciprocates. For example, when the piston 3 is moved upward, the volume of the cylinder 2 may be decreased. In this case, the fuel and the air, which are supplied to the cylinder 2, may be compressed. When the piston 3 reaches a second position P2 (shown in FIG. 2) by being moved at a first position P1 (shown in FIG. 2), a micro-pilot injector (not shown) installed at an upper side of the cylinder 2 ignites the compressed fuel by supplying diesel, so that the piston 3 can be moved downward when the fuel and the air are combusted and exploded. Accordingly, driving power is generated, and exhaust gas may be generated. The first position P1 is a case where the piston 3 is located at a bottom dead point. The second position P2 is a case where the piston 3 is located at a top dead point. When the piston 3 is moved downward, the volume of the cylinder 2 may be increased. When the piston 3 is moved toward the bottom dead point, the air may be supplied to the cylinder 2 by the supplier 4. Therefore, the exhaust gas generated in the cylinder 2 may be discharged to the outside by the air supplied by the supplier 4. The exhaust gas may be naturally discharged to the outside of the cylinder 2 due to high temperature. The exhaust gas may be discharged to the outside along an exhaust pipe coupled to the cylinder 2.

The piston 3 is used to compress the fuel and the air, which are supplied to the cylinder 2. The piston 3 is movably installed in the cylinder 2. The piston 3 reciprocates in the cylinder 2. The piston 3 may be formed in a cylindrical shape. However, the piston 3 may be formed in another shape as long as it can compress the fuel and the air while being moved in the cylinder 2. The piston 3 may be moved upward by a crank shaft (not shown) for providing driving power. The piston 3 may be connected to the crank shaft through a piston rod and a connecting rod, which have a bar shape. When the piston 3 is moved upward by the crank shaft, the piston 3 may compress the fuel and the air. When the fuel and the air, which are supplied to the cylinder 2, are mixed, combusted, and exploded at the top dead point, the piston 3 may be moved downward. Therefore, the piston 3 reciprocates between the bottom dead point P1 and the top dead point P2 in the cylinder 2. The bottom dead point P1 is a point at which the piston 3 is located at the lowest position in the cylinder 2 with respect to the Y-axis direction. The top dead point P2 is a point at which the piston 3 is located at the highest position in the cylinder 2 with respect to the Y-axis direction. In the engine 1 according to the present invention, when the piston 3 reaches the top dead point P2, the compressed fuel may be exploded to generate driving power.

The supplier 4 is used to supply the fuel and the air to the cylinder 2. When the piston 3 is moved toward the bottom dead point P1 from the top dead point P2, the supplier 4 may supply the air to the cylinder 2. In this case, the supplier 4 may supply the air at a lower side of the cylinder 2. When the piston 3 is moved toward the top dead point P2 from the bottom dead point P1, the supplier 4 may supply the air and the fuel to the cylinder 2. In this case, the fuel may be mixed fuel in which the air and the fuel are mixed. The supplier 4 may supply the mixed fuel to the cylinder 2 between the lower and upper sides of the cylinder 2. The engine 1 according to the present invention can supply the mixed fuel in which the air and the fuel are pre-mixed to the cylinder 2 under a process in which the piston 3 compresses the fuel and the air, i.e., while the piston 3 is being moved toward the top dead point P2 from the bottom dead point P1, and hence the air and the fuel in the cylinder 2 can be uniformly mixed as compared with when only the fuel is supplied to the cylinder 2 in the compression process. Thus, the engine 1 according to the present invention can improve the combustion efficiency of the mixed fuel. Accordingly, lowering of power for propelling the ship can be prevented, and occurrence of knocking can be prevented.

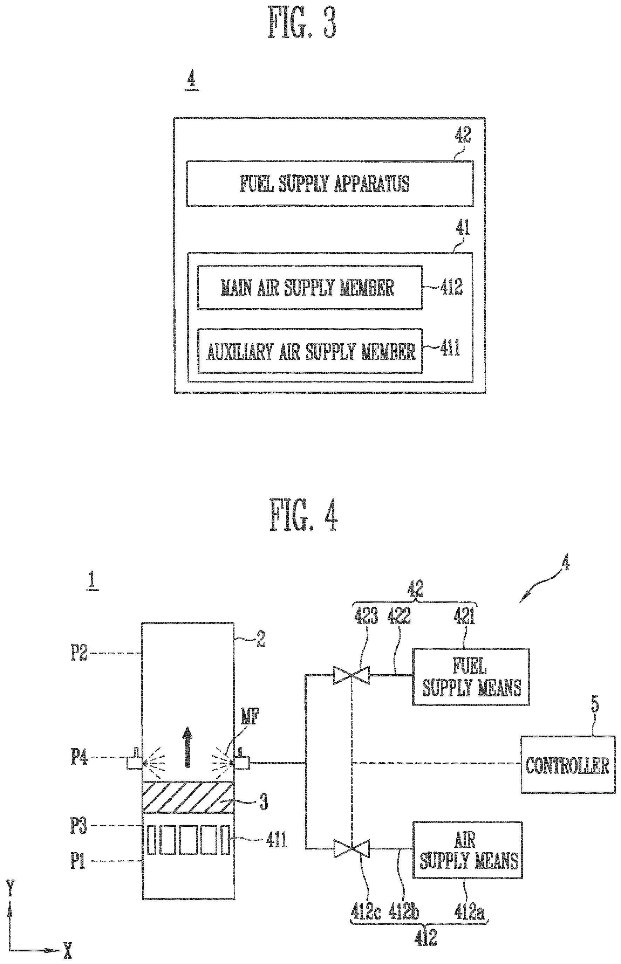

Referring to FIGS. 3 to 6, the suppler 4 includes air supply apparatus 41 and a fuel supply apparatus 42.

The air supply apparatus 41 is used to supply air to the cylinder 2. The air supply apparatus 41 may suck air at the outside or around the engine and supply the air to the cylinder 2. However, the present invention is not limited thereto, and the air supply apparatus 41 may supply air stored in an air storage tank to the cylinder 2 as long as it can supply the air to the cylinder 2. The air supply apparatus 41 may include a main air supply member 411 and an auxiliary air supply member 412.

The main air supply member 411 is used to supply the air to the cylinder 2. The main air supply member 411 may be coupled to the engine block 10 to be located at the lower side of the cylinder 2. The main air supply member 411 may be located at a position lower than that of the auxiliary air supply member 412 with respect to the Y-axis direction. Accordingly, the piston 3 may be sequentially moved to the main air supply member 411, the auxiliary air supply member 412, and the top dead point P2 from the bottom dead point P1 so as to compress the air and the fuel in the cylinder 2. Hereinafter, a case where the piston 3 is located at the main air supply member 411 is referred to as a third position P3 (shown in FIG. 4), and a case where the piston 3 is located at the auxiliary air supply member 412 is referred to as a fourth position P4 (shown in FIG. 4). An upper surface of the piston 3 may be located at the first position P1, the second position P2, the third position P3 and the fourth position P4. The main air supply member 411 may be installed in the engine block 10 to communicate with the cylinder 2. The main air supply member 411 may be provided in plurality to be spaced apart from each other along the circumference of the cylinder liner 2a. The main air supply member 411 may suck external air and supply the air to the cylinder 2. However, the present invention is not limited thereto, and the main air supply member 411 may store air and then supply the air to the cylinder 2. The main air supply member 411 may supply the air to the cylinder 2 at a pressure of about 4 to 5 bars. The main air supply member 411 may communicate with the cylinder 2 or the communication of the main air supply member 411 with the cylinder 2 is blocked when the piston 3 is moved, so that the air is supplied or is not supplied to the cylinder. For example, when the piston 3 is moved further downward toward the bottom dead point than the main air supply member 411 with respect to the Y-axis direction, the main air supply member 411 may communicate with the cylinder 2. That is, when the piston 3 is located between the third position P3 and the first position P1, the main air supply member 411 may communicate with the cylinder 2. Accordingly, the main air supply member 411 can supply the air to the cylinder 2. For example, when the piston 3 is moved further upward toward the top dead point than the main air supply member 411, the communication of the main air supply member 411 with the cylinder 2 may be blocked. That is, when the piston 3 is located between the third position P3 and the second position P2, the main air supply member 411 cannot communicate with the cylinder 2. Accordingly, the main air supply member 411 cannot supply the air to the cylinder 2. The main air supply member 411 and the auxiliary air supply member 412 may supply the air to the cylinder 2. The main air supply member 411 and the auxiliary air supply member 412 may separately supply the air to the cylinder 2. For example, when the total amount of the air with which the cylinder 2 is supplied is 100, the main air supply member 411 may supply 90, and the auxiliary air supply member 412 may supply 10. The air supplied by the auxiliary air supply member 412 may be mixed with fuel supplied by the fuel supply apparatus 42 as mixed fuel to be supplied to the cylinder 2. The main air supply member 411 may further include an air storage chamber 4111 that stores air to inject the air into the cylinder 2. The air storage chamber 4111 will be described later.

The auxiliary air supply member 412 is used to supply air to the cylinder 2. The auxiliary air supply member 412 may be coupled to the cylinder 2. In this case, the auxiliary supply member 412 may be installed in the engine block 10 to be located between the upper and lower sides of the cylinder 2. Therefore, the auxiliary air supply member 412 supplies the air to the cylinder 2 between the upper and lower sides of the cylinder 2. The auxiliary air supply member 412 may supply the air to the cylinder 2 until the piston 3 is moved from the third position P3 to the fourth position P4. The main air supply member 411 may supply the air to the cylinder 2 until the piston 3 is moved from the first position P1 to the third position P3, and therefore, the auxiliary air supply member 412 may supply the air to the cylinder 2 after the main air supply member 411 supplies the air to the cylinder 2. The auxiliary air supply member 412 supplies the air to the cylinder 2 when the fuel is supplied from the fuel supply apparatus 42 to the cylinder 2 while the piston 3 is being moved from the bottom dead point to the top dead point. The cylinder 2 is closed by an exhaust valve which will be described later. The engine 1 according to the present invention can accurately distinguish a timing at which the main air supply member 411 supplies the air to the cylinder 2 from a timing at which the auxiliary air supply member 412 supplies the air to the cylinder 2. Thus, the engine 1 according to the present invention can easily control the ratio of the air supplied to the cylinder 2 by the main air supply member 411 and the auxiliary air supply member 412. The auxiliary air supply member 412 may not supply the air to the cylinder 2 when the piston 3 is moved toward the second position P2, exceeding the fourth position P4. This is because the communication of the auxiliary air supply member 412 with the cylinder 2 is blocked by the movement of the piston 3. The auxiliary air supply member 412 may include an air supply means 412a, an air supply pipe 412b, and an air supply valve 412c.

The air supply means 412a is used to supply air to the cylinder 2. The air supply means 412a may be coupled to the air supply pipe 412b. The air supply means 412a may supply fuel to the cylinder 2 through the air supply pipe 412b. The air supply means 412a may suck external air and supply the air to the cylinder 2. However, the present invention is not limited thereto, and the air supply means 412a may supply air stored in the air storage tank to the cylinder 2 as long as it can supply the air to the cylinder 2. For example, the air supply means 412a may be at least one of a compressor, an impeller, and a pump. The air storage tank may compress and store air, to supply the air to the cylinder 2 through the air supply pipe 412b.

One side of the air supply pipe 412b may be coupled to the air supply means 412a, and the other side of the air supply pipe 412b may be coupled to the cylinder 2. The air supply pipe 412b is used to move air, and be a flow path such as a tube or pipe. The air supply pipe 412b may be coupled to the cylinder liner 2a (shown in FIG. 5) to communicate with the cylinder 2. Therefore, the air supply pipe 412b may move the air supplied by the air supply means 412a to the cylinder 2. The air supply valve 412c is installed in the air supply pipe 412b.

The air supply valve 412c is used to open/close the air supply pipe 412b. The air supply valve 412c may be a ball valve that is a rotary valve. However, the present invention is not limited thereto, and the air supply valve 412c may be another valve such as a gate valve for locking a pipe by being pushed into the pipe or a globe valve for locking a pipe by covering or blocking the pipe as long as it can open/close the air supply pipe 412b. The air supply valve 412c may be rotatably coupled to the engine block 10 to open/close the air supply pipe 412b. When the air supply valve 412c is the ball valve, the air supply valve 412c may be rotated clockwise or counterclockwise with respect to a direction parallel to an X-axis direction (shown in FIG. 5). The X-axis direction may be a direction parallel to the bottom, but the present invention is not limited thereto. The air supply valve 412c may be connected to a controller 5 which will be described later, using at least one of wire communication and wireless communication. Accordingly, the air supply valve 412c is rotated by the controller 5, to open/close the air supply pipe 412b. For example, when the air supply valve 412c is rotated clockwise, the air supply valve 412c may open the air supply pipe 412b. Accordingly, the air may be supplied from the air supply means 412a to the cylinder 2. In this case, the air supply means 412a may supply the air at a pressure higher than the internal pressure of the cylinder 2 such that the air is supplied to the cylinder 2. When the air supply valve 412c is rotated counterclockwise, the air supply valve 412c may close the air supply pipe 412b. Accordingly, the air may not be supplied to the cylinder 2. The air supply valve 412c may be rotated clockwise to close the air supply pipe 412b, and be rotated counterclockwise to open the air supply pipe 412b.

Referring to FIGS. 3 to 6, the fuel supply apparatus 42 is used to supply fuel to the cylinder 2. The fuel supply apparatus 42 may be coupled to the auxiliary air supply member 412. Thus, the fuel supply apparatus 42 supplies the fuel to the auxiliary air supply member 412, to supply the fuel to the cylinder 2. The fuel supply apparatus 42 may supply the fuel to the cylinder 2 when the piston 3 is moved from the third position P3 to the fourth position P4. In this case, the cylinder 2 may be closed by the exhaust valve as described later. The fuel supply apparatus 42 supplies the fuel to the auxiliary air supply member 412, so that mixed fuel MF in which the air supplied by the auxiliary air supply member 412 and the fuel supplied by the fuel supply apparatus 42 are mixed can be supplied to the cylinder 2. In this case, the pressure of the mixed fuel MF supplied to the cylinder 2 may be between about 10 bars and about 20 bars. When the pressure of the mixed fuel MF exceeds 20 bars, the capacity of each of the auxiliary air supply member 412 and the fuel supply apparatus 42 is to be increased, and therefore, the entire size of the engine is increased. When the pressure of the mixed fuel MF is less than 10 bars, the mixed fuel MF is not smoothly supplied to the cylinder 2 due to the pressure of the air supplied to the cylinder 2. When the piston 3 is located at the fourth position P4, the fuel supply apparatus 42 may not supply the fuel to the auxiliary air supply member 412. This is because the communication between the cylinder 2 and the air supply pipe 412b is blocked. The fuel supply apparatus 42 may include a fuel supply means 421, a fuel supply pipe 422, and a fuel supply valve 423.

The fuel supply means 421 is used to supply fuel to the cylinder 2. The fuel supply means 421 may be coupled to the fuel supply pipe 422. The fuel supply pipe 422 may be coupled to the air supply pipe 412b. Thus, the fuel supply means 421 supplies the fuel to the air supply pipe 412b through the fuel supply pipe 422, to supply the fuel to the cylinder 2. The fuel supply means 421 may include a fuel storage tank that stores fuel and a fuel transfer apparatus that produces transfer power for transferring the fuel stored in the fuel storage tank. For example, the fuel may be natural gas (NG). The fuel transfer apparatus compresses the fuel, to supply the fuel to the fuel supply pipe 422. In this case, the fuel supply means 421 may be at least one of a compressor, an impeller, and a pump. The fuel storage tank compresses and stores the fuel, to supply the fuel to the fuel supply pipe 422. In this case, the fuel supply means 421 may not include the fuel transfer apparatus.

One side of the fuel supply pipe 422 may be coupled to the fuel supply means 421, and the other side of the fuel supply pipe 422 may be coupled to the air supply pipe 412b. The fuel supply pipe 422 is used to move fuel, and may be a flow path such as a tube or pipe. The fuel supply pipe 422 may be coupled to the air supply pipe 412b to communicate with the air supply pipe 412b. Therefore, the fuel supply pipe 422 may move the fuel supplied by the fuel supply means 421 to the air supply pipe 412b. The fuel supply pipe 422 may be coupled to the air supply pipe 412b to be located further upward than the air supply pipe 412b. The upward means a direction opposite to the direction of gravity, but may be another direction as long as the fuel can be easily moved from the fuel supply pipe 422 to the air supply pipe 412b. The fuel supply pipe 422 may be coupled to the air supply pipe 412b at a first angle θ (shown in FIG. 6) at an upper side of the air supply pipe 412b. The first angle θ may exceed 0 degree and be less than 180 degrees. Accordingly, the fuel moved through the fuel supply pipe 422 may be supplied to the air supply pipe 412b by the gravity. Thus, the engine 1 according to the present invention can reduce a load where the fuel supply means 42 compresses the fuel to supply the fuel to the air supply pipe 412b, and accordingly, the service lifespan of the fuel supply means 421. The fuel supply valve 423 may be coupled to the fuel supply pipe 422.

The fuel supply valve 423 is used to open/close the fuel supply pipe 422. The fuel supply valve 423 may be movably coupled to the engine block 10. The fuel supply valve 423 may be a gate valve for locking the fuel supply pipe 422 by being pushed into the fuel supply pipe 422. However, the present invention is not limited thereto, and the fuel supply valve 423 may be another valve such as a ball valve that is a rotary valve or a globe valve for locking a pipe by covering or blocking the pipe as long as it can open/close the fuel supply pipe 422. When the fuel supply valve 423 is the gate valve, the fuel supply valve 423 may be moved vertically with respect to the Y-axis direction. The fuel supply valve 423 may be connected to the controller 5 which will be described later, using at least one of wire communication and wireless communication, to be controlled by the controller 5. The fuel supply valve 423 is vertically moved by the controller 5, to open/close the fuel supply pipe 422. For example, when the fuel supply valve 423 is moved downward, the fuel supply valve 423 may open the fuel supply pipe 422. In this case, the fuel supply pipe 422 and the air supply pipe 412b communicate with each other, so that the fuel can be supplied from the fuel supply pipe 422 to the air supply pipe 412b. When the fuel supply valve 423 is moved upward, the fuel supply valve 423 may close the fuel supply pipe 422. In this case, the communication between the fuel supply pipe 422 and the air supply pipe 412b may be blocked. Accordingly, the fuel may not be supplied to the air supply pipe 412b.

Referring to FIGS. 4 to 12, the engine 1 may include the controller 5.

The controller 5 is used to control the fuel supply valve 423 and the air supply valve 412c. The controller 5 may control the fuel supply valve 423 and the air supply valve 412c according to a crank angle of the crank shaft. The controller 5 may open or close the fuel supply pipe 422 by controlling the fuel supply valve 423 according to the crank angle of the crank shaft. The controller 5 may open or close the air supply pipe 412b by controlling the air supply valve 412c according to the crank angle of the crank shaft. The controller 5 may include an acquisition mode 51 and a control mode 52.

The acquisition mode 51 is a mode for acquiring a crank angle of the crank shaft. For example, when the mode of the controller 5 is the acquisition mode 51, the controller 5 may acquire a crank angle of the crank shaft through an angle sensor installed at the crank shaft. The controller 5 may acquire a crank angle of the crank shaft through a governor for detecting a rotation speed of the crank shaft. However, the present invention is not limited thereto, and the controller 5 may acquire a crank angle of the crank shaft through another apparatus. The controller 5 may be connected to the angle sensor, the governor, or the like through at least one of a wire apparatus and a wireless apparatus. Accordingly, when the mode of the controller 5 is the acquisition mode 51, the controller 5 may acquire a crank angle of the crank shaft from the angle sensor, the governor, or the like.

The control mode 52 is a mode for controlling open/close timings of each of the fuel supply valve 423 and the air supply valve 412c according the acquired crank angle of the crank shaft. For example, when the mode of the controller 5 is the control mode 52, the controller 5 may be provided with crank angle information of the crank shaft, which is acquired in the acquisition mode 51, to open/close the fuel supply pipe 422 by controlling the fuel supply valve 423. When the fuel supply pipe 422 is opened, fuel Fuel may be supplied from the fuel supply pipe 422 to the air supply pipe 412b. In this case, the fuel may be natural gas (NG). When the fuel supply pipe 422 is closed, the supply of the fuel from the fuel supply pipe 422 to the air supply pipe 412b may be blocked. For example, when the mode of the controller 5 is the control mode 52, the controller 5 may be provided with the crank angle information of the crank shaft, which is acquired in the acquisition mode 51, to open/close the air supply pipe 412b by controlling the air supply valve 412c. When the air supply pipe 412b is opened, air Air may be supplied from the air supply means 412a to the cylinder 2 along the air supply pipe 412b. When the air supply pipe 412b is closed, the air supplied from the air supply means 412a to the cylinder 2 along the air supply pipe 412b may be blocked. When the mode of the controller 5 is the acquisition mode 51, the controller 5 may acquire a crank angle of the crank shaft. When the mode of the controller 5 is the control mode 52, the controller 5 may control open/close timings of each of the fuel supply valve 423 and the air supply valve 412c according to the acquired crank angle of the crank shaft. When the mode of the controller 5 is the control mode 52, the controller 5 may control the open/close timing of each of the fuel supply valve 423 and the air supply valve 412c by applying the crank angle of the crank shaft, which is acquired in the acquisition mode 51, to open/close timing data of each of the fuel supply valve 423 and the air supply valve 412c according to a preset crank angle of the crank shaft. The open/close timing data of each of the fuel supply valve 423 and the air supply valve 412c according to the crank angle of the crank shaft may be preset by a worker. The controller 5 may control the fuel supply valve 423 and the air supply valve 412c such that mixed fuel in which the fuel and the air are mixed is supplied to the cylinder 2 while the piston 3 is being moved from the bottom dead point P1 to the top dead point P2 in the control mode 52. Specifically, when the supply of the air from the main air supply member 411 to the cylinder 2 is blocked since the piston 3 is moved upward from the bottom dead point P1, the controller 5 may start the supply of the mixed fuel to the cylinder 2 through the air supply pipe 412b. When the communication between the cylinder 2 and the air supply pipe 412b is blocked since the piston 3 is further moved upward, the controller 5 may control the fuel supply valve 423 and the air supply valve 412c to stop the supply of the mixed fuel. That is, the controller may supply the mixed fuel to the cylinder 2 until before the piston 3 is moved from the third position P3 to the fourth position P4. Accordingly, the engine 1 according to the present invention can supply, to the cylinder 2, mixed fuel in which air an fuel are pre-mixed in a process in which the piston 3 compresses the fuel and the air, and hence the air and the fuel in the cylinder 2 can be uniformly mixed as compared with when only the fuel is supplied to the cylinder 2. Thus, the engine 1 according to the present invention can improve the combustion efficiency of the mixed fuel. Accordingly, lowering of power for propelling the ship can be prevented, and occurrence of knocking can be prevented.

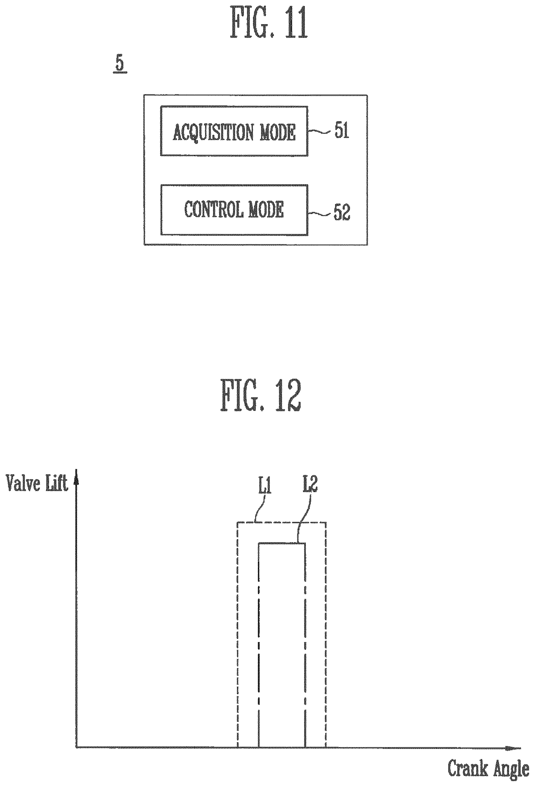

Referring to FIGS. 4 to 12, the controller 5 may control the air supply valve 412c and the fuel supply valve 423 such that the supply of air from the air supply pipe 412b to the cylinder 2 is stopped later than that of fuel from the fuel supply pipe 422 to the air supply pipe 412b. The fuel may be gas. FIG. 12 is a schematic graph illustrating open/close timings of the air supply valve and the fuel supply valve in the engine according to the present invention. The horizontal axis represents crank angle of the crank shaft. The vertical axis represents valve lift. A first line L1 is a graph illustrating open/closing timings of the air supply valve 412c. A second line L2 is a graph illustrating open/close timings of the fuel supply valve 423. The upper direction of the vertical axis in the graph represents that the fuel supply valve 423 and the air supply valve 412c open the fuel supply pipe 422 and the air supply pipe 412b, respectively. The lower direction of the vertical axis in the graph represents that the fuel supply valve 423 and the air supply valve 412c close the fuel supply pipe 422 and the air supply pipe 412b, respectively. The controller 5 may control the fuel supply valve 423 and the air supply valve 412c to respectively open/close periodically the fuel supply pipe 422 and the air supply pipe 412b according to the crank angle of the crank shaft. Referring to FIG. 12, the second line L2 is located at the inside of the first line L1. This means that the fuel supply valve 423 opens the fuel supply pipe 422 after the air supply valve 412c opens the air supply pipe 412b, and the air supply valve 412c closes the air supply pipe 412b after the fuel supply valve 423 closes the fuel supply pipe 422.

First, the close timings of the air supply valve 412c and the fuel supply valve 423 will be described. The controller 5 may control the air supply valve 412c and the fuel supply valve 423 such that the air supply pipe 412b is closed after the fuel supply pipe 422 is closed according to the preset crank angle of the crank shaft. Therefore, the supply of the air from the air supply pipe 412b to the cylinder 2 may be stopped later than that of the fuel from the fuel supply pipe 422 to the air supply pipe 412b. The engine 1 according to the present invention stops the supply of fuel and then stops the supply of air when the supply of the mixed fuel to the cylinder 2 is stopped, so that fuel can be prevented from remaining in the air supply pipe 412b. Thus, the engine 1 according to the present invention prevents the fuel remaining in the air supply pipe 412b from being additionally supplied. Accordingly, occurrence of pre-ignition can be prevented, and unburned fuel including a harmful substance such as nitrogen oxide (NOx) or sulfur oxide (SOx) can be prevented from being discharged to the outside, thereby contributing to environmental protection. Further, the engine 1 according to the present invention stops the supply of the fuel and then stops the supply of the air when the supply of the mixed fuel to the cylinder 2 is stopped, so that the fuel can be prevented from remaining in the air supply pipe 412b. Accordingly, the efficiency of the engine can be prevented from being deteriorated.

Next, the open timings of the air supply valve 412c and the fuel supply valve 423 will be described. The controller 5 may control the air supply valve 412c and the fuel supply valve 423 such that the air supplied from the air supply pipe 412b to the cylinder 2 is supplied at least earlier than the fuel supplied from the fuel supply pipe 422 to the air supply pipe 412b. The controller 5 may control the air supply valve 412c and the fuel supply valve 423 such that the fuel supply pipe 422 is opened after the air supply pipe 412b is opened according to the preset crank angle of the crank shaft. Therefore, the air supplied from the air supply pipe 412b to the cylinder 2 may be supplied earlier than the fuel supplied from the fuel supply pipe 422 to the air supply pipe 412b. The engine 1 according to the present invention supplies the air earlier than the fuel when the mixed fuel is supplied to the cylinder 2. Thus, the pressure of the air supply pipe 412b is lowered due to the flow speed of the air, so that the fuel in the fuel supply pipe 422 can be sucked toward the air flowing in the air supply pipe 412b. Accordingly, the engine 1 according to the present invention pre-mix air and fuel in the air supply pipe 412b and supplies the mixed fuel to the cylinder 2, so that the fuel and the air can be uniformly mixed in the cylinder 2. Thus, the generation of the nitrogen oxide (NOx) that is an exhaust gas pollutant can be reduced, and occurrence of knocking and pre-ignition can be minimized.

The controller 5 may control the air supply valve 412c and the fuel supply valve 423 such that the air supply pipe 412b and the fuel supply pipe 422 are simultaneously opened. The controller 5 may control the air supply valve 412c and the fuel supply valve 423 such that the air supply pipe 412b and the fuel supply pipe 422 are simultaneously opened according to the preset crank angle of the crank shaft. In this case, since the fuel and the air are simultaneously supplied to the air supply pipe 412b, the fuel and the air are simultaneously mixed to be supplied to the cylinder 2. Thus, the engine 1 according to the present invention can uniformly mix the air and the fuel, which are supplied to the cylinder 2. Accordingly, the generation of the nitrogen oxide (NOx) that is an exhaust gas pollutant can be reduced, and occurrence of knocking and pre-ignition can be minimized, thereby improving the efficiency of the engine.

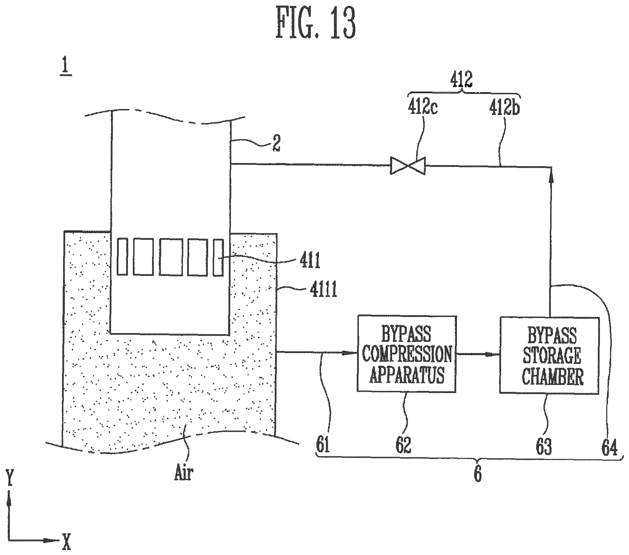

Referring to FIG. 13, in the engine 1 according to the present invention, the main air supply member 411 may further include the air storage chamber 4111.

The air storage chamber 4111 may store air to supply the air to the cylinder 2. The air storage chamber 4111 may be formed in the engine block 10 to be located at the lower side of the cylinder 2. The air storage chamber 4111 may be formed to have a size larger than that of the cylinder 2 such that the cylinder 2 is located at the inside thereof. The air storage chamber 4111 may communicate with the cylinder 2 at the lower side of the cylinder 2. Accordingly, the air storage chamber 4111 may supply air to the cylinder 2. When the piston 3 is moved from the third position P3 to the first position P1, the air storage chamber 4111 communicates with the cylinder 2, to start the supply of the air to the cylinder 2. The air storage chamber 4111 communicates with the cylinder 2 until the piston 3 is moved toward the third position P3 from the first position P1, to supply the air to the cylinder 2. When the piston 3 reaches the third position P3, the communication of the air storage chamber 4111 with the cylinder 2 is blocked, so that the air cannot be supplied to the cylinder 2. The air storage chamber 4111 may be supplied with air sequentially passing through a compressor of a turbo charger, an air cooler, and an air receiver. The compressor of the turbo charger may compress air, using exhaust gas of the engine as driving power. The air cooler may be supplied with the compressed air from the compressor to cool the compressed air. The air cooler may cool the compressed air by heat-exchanging the compressed air with a cooling medium. However, the present invention is not limited thereto, and the air cooler may cool the compressed air, using another method such as a method using a cooling apparatus. The air receiver may be supplied with the cooled air from the air cooler. The air storage chamber 4111 may store the air supplied from the air receiver. For example, the air storage chamber 4111 may store the air at a pressure of about 4 to 5 bars.

Referring to FIG. 13, the engine 1 according to the present invention may further include a bypass 6.

The bypass 6 is used to supply a portion of the air stored in the air storage chamber 4111 to the auxiliary air supply member 412. The bypass 6 may be connected to each of the air storage chamber 4111 and the auxiliary air supply member 412 to be located between the air storage chamber 4111 and the auxiliary air supply member 412. Therefore, the bypass 6 may be supplied with air from the air storage member 4111 to supply the air to the auxiliary air supply member 412. The bypass 6 may compress the air supplied from the air storage chamber 4111 and supply the compressed air to the auxiliary air supply member 412. The bypass 6 may include a first bypass pipe 61, a bypass compression apparatus 62, a bypass storage chamber 63, and a second bypass pipe 64.

The first bypass pipe 61 is used to connect the air storage chamber 4111 to the bypass storage chamber 63. The first bypass pipe 61 may be a tube or pipe. When the first bypass pipe 61 connects the air storage chamber 4111 to the bypass storage chamber 63, the air storage in the air storage chamber 411 may be supplied to the air storage chamber 4111 along the first bypass pipe 61. The bypass compression apparatus 62 may be installed in the first bypass pipe 61.

The bypass compression apparatus 62 is used to compress air supplied from the air storage chamber 4111 to the bypass storage chamber 63. The bypass compression apparatus 62 may compress air supplied from the air storage chamber 4111 and then supply the compressed air to the bypass storage chamber 63 through the first bypass pipe 61. The bypass compression apparatus 62 may compress the air at a pressure between about 10 bars and about 20 bars. Accordingly, the bypass storage chamber 63 may store the air supplied from the bypass compression apparatus 62 at the pressure between about 10 bars and about 20 bars. The bypass compression apparatus 62 may be a compressor or impeller.

The bypass storage chamber 63 is used to compress and store air supplied from the air storage chamber 4111. One side of the bypass storage chamber 63 may be connected to the first bypass pipe 61, and the other side of the bypass storage chamber 63 may be connected to the second bypass pipe 62. Therefore, the bypass storage chamber 63 may be supplied with air through the first bypass pipe 61. The bypass storage chamber 63 is a chamber that is empty therein, and may be installed to be located at least one of the inside and outside of the engine block 10. The bypass storage chamber 63 may store air at a pressure higher than that of the air storage chamber 4111. For example, the pressure of the air stored by the bypass storage chamber 63 may be between about 10 bars and about 20 bars. The bypass storage chamber 63 may store the air compressed by the bypass compression apparatus 62. A recompression apparatus for maintaining compressed air in a state in which it is compressed, a cooling apparatus for cooling the compressed air, an evaporation apparatus for evaporating the compressed air, and the like may be installed in the bypass storage chamber 63. The bypass storage chamber 63 may supply the compressed air stored therein to the second bypass pipe 62.

The second bypass pipe 64 is used to connect the bypass storage chamber 63 to the auxiliary air supply member 412. The second bypass pipe 64 may be a tube or pipe. When the second bypass pipe 64 connects the bypass storage chamber 63 to the auxiliary air supply member 412, the air stored by the bypass storage chamber 64 may be supplied to the auxiliary air supply member 412 along the second bypass pipe 64. The second bypass pipe 64 may be coupled to the air supply pipe 412b to communicate with the air supply pipe 412b of the auxiliary air supply member 412. Accordingly, the air stored by the bypass storage chamber 63 may flow in the air supply pipe 412b along the second bypass pipe 64. The air flowing in the air supply pipe 412b may be supplied to the cylinder 2 or the supply of the air to the cylinder 2 may be blocked according to whether the air supply valve 412c is opened/closed. Accordingly, in the engine 1 according to the present invention, the auxiliary air supply member 412 can be supplied with air from the air storage chamber 4111 through the bypass 6, and hence it is unnecessary to install a separate airs supply apparatus for supplying air used in mixture of air and fuel. Thus, cost required to install a separate compression apparatus for supplying mixed fuel to the cylinder 2 can be reduced. The separate air supply apparatus and the separate compression apparatus may correspond to the air supply means 412a.

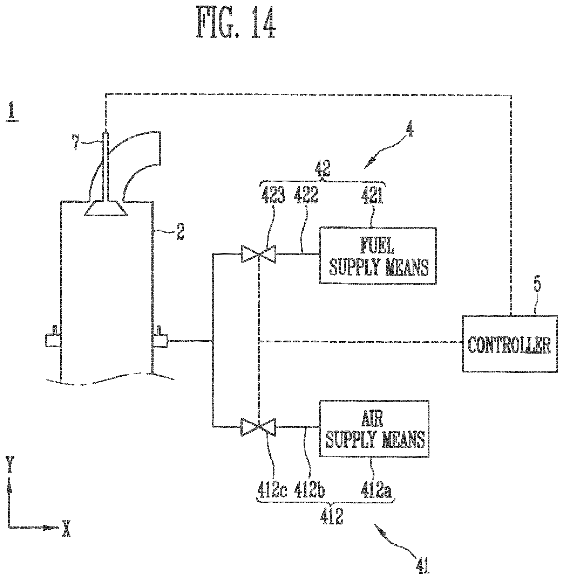

Referring to FIGS. 14 to 16, the engine 1 according to the present invention includes an exhaust valve 7.

The exhaust valve 7 may be movably coupled to the cylinder 2 with respect to the Y-axis direction. The exhaust valve 7 may be coupled to the engine block 10 to be located at the upper side of the cylinder 2. The exhaust valve 7 is used to open/close the cylinder 2 such that exhaust gas generated when fuel and air are combusted is discharged from the cylinder 2. The exhaust valve 7 may be connected to the controller, using at least one of wire communication and wireless communication. Accordingly, the exhaust valve 7 is moved by the controller 5, so that the cylinder 2 can be opened/closed. For example, the exhaust valve 7 is moved downward by the controller 5, so that the cylinder 2 and an exhaust tube can be communicated with each other. The exhaust tube is a flow path for discharging exhaust gas to the outside. Accordingly, the exhaust valve 7 may open the cylinder 2. In this case, the exhaust gas may be naturally discharged to the outside through the exhaust tube due to high temperature, or be artificially discharged to the outside through the exhaust tube by the pressure of air supplied to the inside of the cylinder 2. The exhaust valve 7 is moved upward by the controller 5, so that the cylinder 2 and the exhaust tube can be blocked. Accordingly, the exhaust valve 7 may close the cylinder 2. When the exhaust valve 7 closes the cylinder 2, and the piston 3 is moved toward the top dead point, mixed fuel may be supplied to the cylinder 2. When the piston 3 is further moved toward the top dead point, the mixed fuel supplied to the cylinder 2 may be compressed.

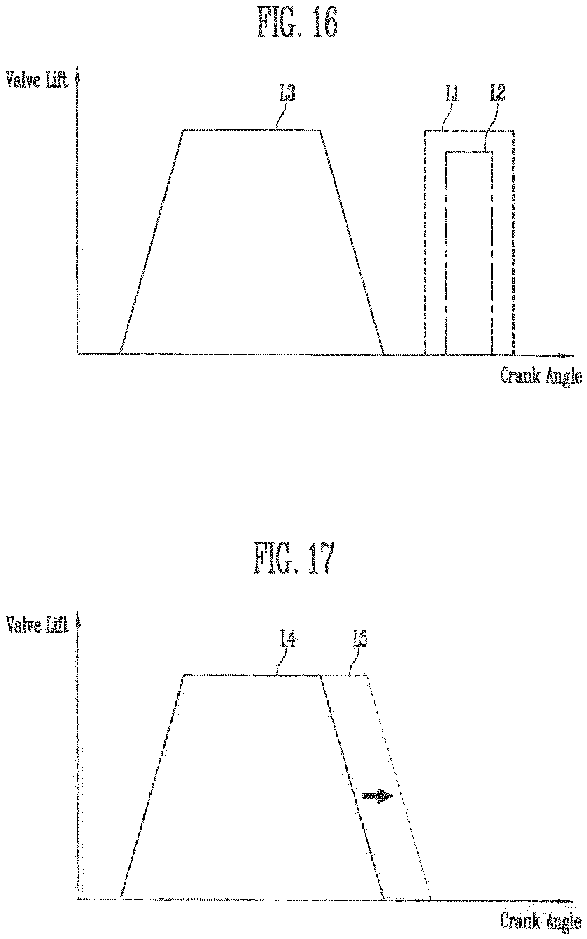

The controller 5 may control the exhaust valve 7, the air supply valve 412C, and the fuel supply valve 423 such that the mixed fuel is supplied to the cylinder 2 after the exhaust valve 7 closes the cylinder 2. The controller 5 may control the exhaust valve 7, the air supply valve 412C, and the fuel supply valve 423 according to the acquisition mode 51 and the control mode 52. The controller 5 may control the exhaust valve 7, the air supply valve 412C, and the fuel supply valve 423 according to the preset crank angle of the crank shaft. A third line L3 (shown in FIG. 16) is a graph illustrating open/close timings at which the exhaust valve 7 opens/closes the cylinder 2. The third line L3 is a graph including all open/close timings at which the exhaust valve 7 opens/closes the cylinder 2 in a gas mode in which the fuel is gas and open/close timings at which the exhaust valve 7 opens/closes the cylinder 2 in a diesel mode in which the fuel is diesel. The third line L3 is located at a left side from the first line L1 and the second line L2. This means that the air supply valve 412c and the fuel supply valve 423 respectively open/close the air supply pipe 412b and the fuel supply pipe 422 after the exhaust valve 7 opens/closes the cylinder 2. The controller 5 may open/close the cylinder 2 by controlling the exhaust valve 7 when the exhaust gas remaining in the cylinder 2 is discharged to the outside. For example, the controller 5 may control the exhaust valve 7 such that the cylinder 2 is opened while the piston 3 is being moved from the second position P2 to the first position P1. The control 5 may open the cylinder 2 until before the piston 3 is located at the third position P3 from the first position P1. Therefore, the exhaust gas generated in the cylinder 2 may be naturally discharged due to high temperature, or be artificially discharged to the outside through the exhaust tube by the air supplied through the main air supply member 411. When the piston 3 is located at the third position P3, the controller 5 may close the cylinder 2. When the cylinder 2 is closed, the controller 5 may control the air supply valve 412c and the fuel supply valve 423 to respectively open the air supply pipe 412b and the fuel supply pipe 422. Accordingly, mixed fuel MF in which fuel and air are mixed may be supplied to the cylinder 2. The engine 1 according to the present invention can supply the mixed fuel MF to the cylinder 2 after the cylinder 2 is closed, and hence methane slip where the fuel is leaked to the outside can be prevented. Thus, the engine 1 according to the present invention prevents an environmental pollutant such as nitrogen oxide (NOx) or sulfur oxide (SOx) from being leaked to the outside of the ship. Accordingly, environmental pollution can be prevented, and strict environment regulations can be satisfied.

Referring to FIG. 17, the controller 5 may control open/close timings at which the exhaust valve 7 opens/closes the cylinder 2 by controlling the exhaust valve 7 according to crank angles of the crank shaft 7, which are differently set depending on the gas mode in which the fuel is gas and the diesel mode in which the fuel is diesel. In this case, the engine 1 according to the present invention may be a dual fuel engine. The dual fuel engine may produce power for propelling the ship by mixing two kinds of fuel, e.g., natural gas (NG) and diesel (MDO). The dual fuel engine may include a diesel injector and a micro-pilot injector. The diesel injector and the micro-injector may be installed at different positions of the cylinder 2. In the diesel mode in which the fuel is the diesel (MDO), the diesel injector is used to spray diesel (MDO) fuel into the cylinder 2 in which air is compressed. Accordingly, the dual fuel engine ignites the diesel fuel due to the compression air, to produce driving power. In the gas mode in which the fusel is the natural gas, the micro-pilot injector is used to ignite gas fuel compressed in the cylinder 2 by spraying diesel oil into the cylinder 2. When the gas fuel and air are compressed, the micro-pilot injector sprays a small amount of diesel oil into the cylinder 2, to ignite the compressed gas fuel. The diesel injector is used to supply the diesel fuel to the cylinder 2 in the diesel mode, and the micro-pilot injector is used to ignite the gas fuel compressed in the cylinder 2 in the gas mode. Therefore, an amount of diesel supplied to the cylinder 2 by the diesel injector is larger than that of diesel supplied to the cylinder 2 by the micro-pilot injector. Referring to FIG. 17, a fourth line L4 is a graph illustrating open/close timings at which the exhaust valve 7 opens/closes the cylinder 2 in the diesel mode in which the fuel is diesel. A fifth line L5 is a graph illustrating open/close timings at which the exhaust valve 7 opens/closes the cylinder 2 in the gas mode in which the fuel is gas. The graph of the fifth line L5 goes downward at a right side as compared with the fourth line L4. This means that open/close timings at which the exhaust valve 7 opens/closes the cylinder 2 in the gas mode are later than those in the diesel mode. The controller 5 may control the exhaust valve such that the open/close timings at which the exhaust valve 7 opens/closes the cylinder 2 in the gas mode are later than those in the diesel mode. The open/close timings of the cylinder 2 are related to the compression pressure and compression temperature of fuel and air, which are supplied to the cylinder 2. That is, the open/close timings of the cylinder 2 are related to the effective compression ratio of the fuel and the air, which are supplied to the cylinder 2. The effective compression ratio refers to an actual compression ratio in the engine, and is a ratio of a volume of the cylinder 2 at the moment when a scavenge hole is closed in a 2-stroke engine to a volume of the cylinder 2 when the piston 3 reaches the top dead point. When the close timing of the cylinder 2 is fast, the compression time at which the piston 3 compresses the fuel and the air, which are supplied to the cylinder 2, becomes fast. Hence, the compression pressure of the air and the fuel is increased, and therefore, the compression temperature of the air and the fuel may be increased. When the close timing of the cylinder 2 is slow, the compression time at which the piston 3 compresses the fuel and the air, which are supplied to the cylinder 2, becomes slow as compared with when the close timing of the cylinder 2 is fast. Hence, the compression pressure of the air and the fuel is decreased, and therefore, the compression temperature of the air and the fuel may be decreased. In the engine 1 according to the present invention, geometrical compression ratios of the gas mode and the diesel mode may be the same. In the gas mode, the engine 1 according to the present invention allow the close timing of the cylinder 2 to become later than that of the cylinder 2 in the diesel mode, so that the compression temperature of the cylinder 2 can be further decreased by decreasing the compression pressure of the cylinder 2 as compared with that of the cylinder 2 in the diesel mode. In this case, the controller 5 may allow the supply timing of the mixed fuel supplied to the cylinder 2 to become late. Accordingly, in the gas mode, the engine 1 according to the present invention decreases the effective compression ratio as compared with that in the diesel mode. Thus, the compression temperature of the cylinder 2 is decreased, so that pre-ignition before the piston 3 reaches the top dead point can be prevented. Accordingly, the engine 1 according to the present invention can change each effective compression ratio depending on the gas mode and the diesel mode, and thus the efficiency of the engine in each of the gas mode and the diesel mode can be improved. When the ship sails in an emission control area (ECA), the mode of the controller 5 may be switched to the gas mode in which a harmful substance such as nitrogen oxide (NOx) or sulfur oxide (SOx) is little discharged. When the ship sails in an emission reduction area (Global), the mode of the controller 5 may be switched to the diesel mode. The engine 1 according to the present invention differently controls the close timings at the exhaust valve 7 closes the cylinder 2 depending on the gas mode and the diesel mode, so that the efficiency of the engine can be improved without structural change of the cylinder 2.

The present invention described above is not limited to the aforementioned embodiments and the accompanying drawings. It will be apparent that those skilled in the art can make various modifications, changes and variations thereto without departing from the scope of the appended claims.

## Claims

1. An engine for a ship, comprising:
a cylinder providing a space for combusting fuel;
a piston reciprocating between a top dead point and a bottom dead point in the cylinder; and
a supplier coupled to the cylinder, the supplier supplying the fuel and air to the cylinder,
wherein the supplier includes:
a fuel supply apparatus supplying the fuel to the cylinder; and
an air supply apparatus supplying the air to the cylinder,
wherein the air supply apparatus includes an auxiliary air supply member supplying the air to the cylinder between a lower side and an upper side of the cylinder,
where the auxiliary air supply member supplies the air together with the fuel when the fuel is supplied by the fuel supply apparatus while the piston is being moved from the bottom dead point to the top dead point
**characterized by** further comprising:
an exhaust valve coupled to the cylinder to be located at the upper side of the cylinder, the exhaust valve opening/closing the cylinder such that exhaust gas generated when the fuel is combusted in the cylinder is discharged; and
a controller controlling the exhaust valve,
wherein the controller controls the exhaust valve such that, in a gas mode in which the fuel is gas, a close timing at which the exhaust valve closes the cylinder is later than that in a diesel mode in which the fuel is diesel.

2. The engine of claim 1, wherein the air supply apparatus includes a main air supply member supplying the air to the cylinder at the lower side of the cylinder.

3. The engine of claim 2, wherein the auxiliary air supply member supplies the air to the cylinder after the main air supply member supplies the air to the cylinder.

4. The engine of claim 1, wherein the fuel supply apparatus is coupled to the auxiliary air supply member, and
the auxiliary air supply member supplies the air to the fuel supplied by the fuel supply apparatus such that mixed fuel in which the air and the fuel are mixed is supplied to the cylinder.

5. The engine of claim 1, wherein the auxiliary air supply member includes an air supply means supplying the air to the cylinder, an air supply pipe connecting the air supply means to the cylinder, and an air supply valve installed in the air supply pipe, the air supply valve opening/closing the air supply pipe such that the air is supplied to the cylinder, and
the fuel supply apparatus includes a fuel supply means supplying the fuel to the cylinder, a fuel supply pipe connecting the fuel supply means to the air supply pipe, and a fuel supply valve installed in the fuel supply pipe, the fuel supply valve opening/closing the fuel supply pipe such that the fuel is supplied to the air supply pipe.

6. The engine of claim 5, wherein the fuel supply pipe is coupled to the air supply pipe to be located further upward than the air supply pipe.

7. The engine of claim 5, comprising a controller controlling the air supply valve and the fuel supply valve,
wherein the controller controls the air supply valve and the fuel supply valve such that the air supply valve and the fuel supply valve respectively opens/closes the air supply pipe and the fuel supply pipe according to a crank angle of a crank shaft installed to be connected to the piston.

8. The engine of claim 7, wherein the controller includes:
an acquisition mode in which a crank angle of the crank shaft is acquired; and
a control mode in which open/close timings of each of the air supply valve and the fuel supply valve are controlled according to the crank angle of the crank shaft, which is acquired in the acquisition mode.

9. The engine of claim 5, comprising a controller controlling the air supply valve and the fuel supply valve,
wherein the controller controls the air supply valve and the fuel supply valve such that the supply of the air from the air supply pipe to the cylinder is stopped later than that of the fuel supplied from the fuel supply pipe to the air supply pipe.

10. The engine of claim 5, comprising a controller controlling the air supply valve and the fuel supply valve,
wherein the controller controls the air supply valve and the fuel supply valve such that the air supplied from the air supply pipe to the cylinder is supplied at least earlier than the fuel supplied from the fuel supply pipe to the air supply pipe.

11. The engine of claim 2, wherein the main air supply member includes an air storage chamber storing the air to supply the air to the cylinder.

12. The engine of claim 11, comprising a bypass supplying a portion of the air stored in the air storage chamber to the auxiliary air supply member.

13. The engine of claim 12, wherein the bypass includes:
a bypass storage chamber compressing and storing the air supplied from the air storage chamber;
a first bypass pipe connecting the bypass storage chamber to the air storage chamber;
a bypass compression apparatus installed in the first bypass pipe, the bypass compression apparatus compressing the air supplied from the air storage chamber to the bypass storage chamber; and
a second bypass pipe connecting the bypass storage chamber to the auxiliary air supply member such that the air compressed and stored in the bypass storage chamber is supplied to the auxiliary air supply member.

14. The engine of claim 1, comprising:
an exhaust valve coupled to the cylinder to be located at the upper side of the cylinder, the exhaust valve opening/closing the cylinder such that exhaust gas generated when the fuel is combusted in the cylinder is discharged; and
a controller controlling the exhaust valve and the supplier,
wherein the controller controls the exhaust valve and the supplier such that the mixed fuel is supplied to the cylinder after the cylinder is closed.

## Patentansprüche

1. Ein Motor für ein Schiff, umfassend:
einen Zylinder, welcher einen Raum für Kraftstoffverbrennung bereitstellt;
einen Kolben, welcher sich zwischen einem oberen Totpunkt und einem unteren Totpunkt in dem Zylinder hin und her bewegt; und
eine an den Zylinder gekoppelte Zuführung, welche den Kraftstoff und die Luft dem Zylinder zuführt,
wobei die Zuführung umfasst:
eine Kraftstoffzufuhreinrichtung, welche den Kraftstoff dem Zylinder zuführt; und
ein Luftzufuhreinrichtung, welche dem Zylinder die Luft zuführt,
wobei die Luftzufuhreinrichtung ein Hilfsluftzufuhrelement beinhaltet, welches dem Zylinder die Luft zwischen einer unteren Seite und einer oberen Seite des Zylinders zuführt,
wobei das Hilfsluftzufuhrelement die Luft zusammen mit dem Kraftstoff zuführt, wenn der Kraftstoff vom Kraftstoffzufuhrgerät zugeführt wird, während der Kolben von dem unteren Totpunkt zu dem oberen Totpunkt bewegt wird,
**dadurch gekennzeichnet, dass** er ferner umfasst:
ein mit dem Zylinder gekoppeltes Auslassventil, , das an der oberen Seite des Zylinders angeordnet ist, wobei das Auslassventil den Zylinder öffnet/schließt, so dass Abgas, welches erzeugt wird, wenn der Kraftstoff in dem Zylinder verbrannt wird, ausgestoßen wird; und
eine Steuerung, die das Auslassventil steuert,
wobei die Steuerung das Auslassventil so steuert, dass in einem Benzinmodus, in welchem der Kraftstoff Gas ist, ein Schließzeitpunkt, zu welchem das Auslassventil den Zylinder schließt, später ist als das in einem Dieselmodus, in dem der Kraftstoff Diesel ist.

2. Motor nach Anspruch 1, wobei die Luftzufuhreinrichtung ein Hauptluftzufuhrelement umfasst, welches die Luft dem Zylinder an der unteren Seite des Zylinders zuführt.

3. Motor nach Anspruch 2, wobei das Hilfsluftzufuhrelement die Luft dem Zylinder zuführt, nachdem das Hauptluftzufuhrelement die Luft dem Zylinder zuführt.

4. Motor nach Anspruch 1, wobei das Kraftstoffzufuhrgerät mit dem Hilfsluftzufuhrelement gekoppelt ist, und
das Hilfsluftzufuhrelement die Luft dem von der Kraftstoffzufuhreinrichtung zugeführten Kraftstoff zuführt, so dass gemischter Kraftstoff, in welchem die Luft und der Kraftstoff gemischt sind, dem Zylinder zugeführt wird.

5. Motor nach Anspruch 1, wobei das Hilfsluftzufuhrelement ein Luftzufuhrmittel, welches die Luft dem Zylinder zuführt, eine Luftzufuhrleitung, welche das Luftzufuhrmittel mit dem Zylinder verbindet, und ein in der Luftzufuhrleitung installiertes Luftzufuhrventil aufweist, wobei das Luftzufuhrventil die Luftzufuhrleitung öffnet/schließt, so dass die Luft dem Zylinder zugeführt wird, und
das Kraftstoffzufuhrgerät ein Kraftstoffzufuhrmittel, welches den Kraftstoff dem Zylinder zuführt, eine Kraftstoffzufuhrleitung, welche das Kraftstoffzufuhrmittel mit der Luftzufuhrleitung verbindet, und ein Kraftstoffzufuhrventil aufweist, welches in der Kraftstoffzufuhrleitung installiert ist, wobei das Kraftstoffzufuhrventil die Kraftstoffzufuhrleitung öffnet/schließt, so dass der Kraftstoff der Luftzufuhrleitung zugeführt wird.

6. Motor nach Anspruch 5, wobei die Kraftstoffzufuhrleitung mit der Luftzufuhrleitung gekoppelt ist und oberhalb der Luftzufuhrleitung angeordnet ist.

7. Motor nach Anspruch 5, umfassend eine Steuerung, welche das Luftzufuhrventil und das Kraftstoffzufuhrventil steuert,
wobei die Steuerung das Luftzufuhrventil und das Kraftstoffzufuhrventil so steuert, dass das Luftzufuhrventil und das Kraftstoffzufuhrventil jeweils die Luftzufuhrleitung und die Kraftstoffzufuhrleitung entsprechend einem Kurbelwinkel einer Kurbelwelle, welche installiert ist, um mit dem Kolben verbunden zu sein, öffnet/schließt.

8. Motor nach Anspruch 7, wobei die Steuerung Folgendes beinhaltet:
einen Erfassungsmodus, in welchem ein Kurbelwinkel der Kurbelwelle erfasst wird; und
einen Steuermodus, in welchem die Öffnungs-/Schließzeiten jedes des Luftzufuhrventils und des Kraftstoffzufuhrventils gemäß dem Kurbelwinkel der Kurbelwelle gesteuert werden, welcher in dem Erfassungsmodus erfasst wird.

9. Motor nach Anspruch 5, umfassend eine Steuerung, welche das Luftzufuhrventil und das Kraftstoffzufuhrventil steuert,
wobei die Steuerung das Luftzufuhrventil und das Kraftstoffzufuhrventil so steuert, dass die Zufuhr der Luft von der Luftzufuhrleitung zum Zylinder später gestoppt wird als die des Kraftstoffs, der von der Kraftstoffzufuhrleitung zur Luftzufuhrleitung zugeführt wird.

10. Motor nach Anspruch 5, eine Steuerung umfassend, welche das Luftzufuhrventil und das Kraftstoffzufuhrventil steuert,
wobei die Steuerung das Luftzufuhrventil und das Kraftstoffzufuhrventil so steuert, dass die von der Luftzufuhrleitung zu dem Zylinder zugeführte Luft wenigstens früher als der von der Kraftstoffzufuhrleitung zu der Luftzufuhrleitung zugeführte Kraftstoff zugeführt wird.

11. Motor nach Anspruch 2, wobei das Hauptluftzufuhrelement eine Luftspeicherkammer enthält, welche die Luft speichert, um die Luft dem Zylinder zuzuführen.

12. Motor nach Anspruch 11, umfassend einen Bypass, der einen Anteil der in der Luftspeicherkammer gespeicherten Luft dem Hilfsluftzufuhrelement zuführt.

13. Motor nach Anspruch 12, wobei der Bypass beinhaltet:
eine Bypass-Speicherkammer, welche die von der Luftspeicherkammer zugeführte Luft komprimiert und speichert;
ein erstes Bypass-Rohr, welches die Bypass-Speicherkammer mit der Luftspeicherkammer verbindet;
ein Bypass-Kompressionsgerät, welches in der ersten Bypass-Leitung installiert ist, wobei das Bypass-Kompressionsgerät die von der Luftspeicherkammer zugeführte Luft zu der Bypass-Speicherkammer komprimiert; und
ein zweites Bypass-Rohr, welches die Bypass-Speicherkammer mit dem Hilfsluftzufuhrelement verbindet, so dass die in der Bypass-Speicherkammer verdichtete und gespeicherte Luft dem Hilfsluftzufuhrelement zugeführt wird.

14. Motor nach Anspruch 1, umfassend:
ein Auslassventil, welches mit dem Zylinder gekoppelt ist, und an der oberen Seite des Zylinders angeordnet ist, wobei das Auslassventil den Zylinder öffnet/schließt, so dass beim Verbrennen des Abgases erzeugtes Abgas ausgestoßen wird; und
eine Steuerung, welche das Auslassventil und die Zuführung steuert,
wobei die Steuerung das Auslassventil und die Zuführung so steuert, dass der gemischte Kraftstoff dem Zylinder zugeführt wird, nachdem der Zylinder geschlossen ist.

## Revendications

1. Moteur de navire, comprenant:
un cylindre fournissant un espace pour la combustion du carburant;
un piston effectuant un mouvement de va-et-vient entre un point mort haut et un point mort bas dans le cylindre; et
un circuit d'alimentation couplé au cylindre, le circuit d'alimentation fournissant le carburant et l'air au cylindre,
dans lequel le circuit d'alimentation comprend:
un appareil d'alimentation en carburant fournissant le carburant au cylindre; et
un appareil d'alimentation en air injectant de l'air dans le cylindre,
dans lequel l'appareil d'alimentation en air comprend un élément d'alimentation en air auxiliaire injectant de l'air dans le cylindre entre un côté inférieur et un côté supérieur du cylindre,
dans lequel l'élément d'alimentation en air auxiliaire fournit l'air en même temps que le carburant lorsque le carburant est fourni par le dispositif d'alimentation en carburant alors que le piston est déplacé du point mort bas au point mort haut,
**caractérisé en ce qu'**il comprend en outre:
une soupape d'échappement couplée au cylindre pour être située sur le côté supérieur du cylindre, la soupape d'échappement ouvrant/fermant le cylindre de telle sorte que les gaz d'échappement générés lorsque le carburant est brûlé dans le cylindre sont évacués; et
un dispositif de commande actionnant la soupape d'échappement,
dans lequel le dispositif de commande actionne la soupape d'échappement de telle sorte que, dans un mode gaz dans lequel le carburant est du gaz, un moment de fermeture auquel la soupape d'échappement ferme le cylindre est plus tardif que celui dans un mode diesel dans lequel le carburant est du diesel.

2. Moteur selon la revendication 1, dans lequel le dispositif d'alimentation en air comprend un élément d'alimentation en air principal injectant de l'air dans le cylindre au niveau du côté inférieur du cylindre.

3. Moteur selon la revendication 2, dans lequel l'élément d'alimentation en air auxiliaire fournit l'air au cylindre après que l'élément d'alimentation en air principal fournit l'air au cylindre.

4. Moteur selon la revendication 1, dans lequel le dispositif d'alimentation en carburant est couplé à l'élément d'alimentation en air auxiliaire, et
l'élément d'alimentation en air auxiliaire fournit l'air au carburant fourni par l'appareil d'alimentation en carburant de sorte que le carburant mélangé dans lequel l'air et le carburant sont mélangés est fourni au cylindre.

5. Moteur selon la revendication 1, dans lequel l'élément d'alimentation en air auxiliaire comprend un moyen d'alimentation en air injectant de l'air dans le cylindre, un tuyau d'alimentation en air reliant le moyen d'alimentation en air au cylindre, et une soupape d'alimentation en air installée dans le tuyau d'alimentation en air, la soupape d'alimentation en air ouvrant/fermant le tuyau d'alimentation en air de sorte que l'air soit fourni au cylindre, et
le dispositif d'alimentation en carburant comprend un moyen d'alimentation en carburant fournissant le carburant au cylindre, un tuyau d'alimentation en carburant reliant le moyen d'alimentation en carburant au tuyau d'alimentation en air, et une soupape d'alimentation en carburant installée dans le tuyau d'alimentation en carburant, la soupape d'alimentation en carburant ouvrant/fermant le tuyau d'alimentation en carburant de telle sorte que le carburant soit fourni au tuyau d'alimentation en air.

6. Moteur selon la revendication 5, dans lequel le tuyau d'alimentation en carburant est couplé au tuyau d'alimentation en air pour être situé plus haut que le tuyau d'alimentation en air.

7. Moteur selon la revendication 5, comprenant un dispositif de commande actionnant la soupape d'alimentation en air et la soupape d'alimentation en carburant,
dans lequel le dispositif de commande actionne la soupape d'alimentation en air et la soupape d'alimentation en carburant de sorte que la soupape d'alimentation en air et la soupape d'alimentation en carburant ouvrent/ferment respectivement le tuyau d'alimentation en air et le tuyau d'alimentation en carburant selon un angle de manivelle d'un vilebrequin installé pour être connecté au piston.

8. Moteur selon la revendication 7, dans lequel le dispositif de commande comprend:
un mode d'acquisition dans lequel un angle de vilebrequin du vilebrequin est acquis; et
un mode de commande dans lequel les temporisations d'ouverture/fermeture de chacune de la soupape d'alimentation en air et de la soupape d'alimentation en carburant sont commandées en fonction de l'angle de vilebrequin du vilebrequin, qui est acquis dans le mode d'acquisition.

9. Moteur selon la revendication 5, comprenant un dispositif de commande actionnant la soupape d'alimentation en air et la soupape d'alimentation en carburant,
dans lequel le dispositif de commande actionne la soupape d'alimentation en air et la soupape d'alimentation en carburant de telle sorte que l'alimentation en air depuis le tuyau d'alimentation en air vers le cylindre soit arrêtée plus tard que celle du carburant fourni depuis le tuyau d'alimentation en carburant vers le tuyau d'alimentation en air.

10. Moteur selon la revendication 5, comprenant un dispositif de commande actionnant la soupape d'alimentation en air et la soupape d'alimentation en carburant,
dans lequel le dispositif de commande actionne la soupape d'alimentation en air et la soupape d'alimentation en carburant de telle sorte que l'air fourni par le tuyau d'alimentation en air au cylindre est fourni au moins plus tôt que le carburant fourni par le tuyau d'alimentation en carburant au tuyau d'alimentation en air.

11. Moteur selon la revendication 2, dans lequel l'élément principal d'alimentation en air comprend une chambre de stockage d'air stockant l'air pour fournir l'air au cylindre.

12. Moteur selon la revendication 11, comprenant une dérivation fournissant une partie de l'air stocké dans la chambre de stockage d'air à l'élément d'alimentation en air auxiliaire.

13. Moteur selon la revendication 12, dans lequel la dérivation comprend:
une chambre de stockage en dérivation qui comprime et stocke l'air fourni par la chambre de stockage d'air;
un premier tuyau de dérivation reliant la chambre de stockage de dérivation à la chambre de stockage d'air;
un appareil de compression de dérivation installé dans le premier tuyau de dérivation, l'appareil de compression de dérivation comprimant l'air fourni par la chambre de stockage d'air à la chambre de stockage de dérivation; et
un second tuyau de dérivation reliant la chambre de stockage de dérivation à l'élément d'alimentation en air auxiliaire de telle sorte que l'air comprimé et stocké dans la chambre de stockage de dérivation est fourni à l'élément d'alimentation en air auxiliaire.

14. Moteur selon la revendication 1, comprenant:
une soupape d'échappement couplée au cylindre pour être située sur le côté supérieur du cylindre, la soupape d'échappement ouvrant/fermant le cylindre de telle sorte que les gaz d'échappement générés lorsque le carburant est brûlé dans le cylindre sont évacués; et
un dispositif de commande actionnant la soupape d'échappement et le circuit d'alimentation,
dans lequel le dispositif de commande actionne la soupape d'échappement et le circuit d'alimentation de telle sorte que le carburant mélangé soit fourni au cylindre après que le cylindre soit fermé.
